# EUROPÄISCHE PATENTANMELDUNG

(11) **EP 2 923 868 A2**
(43) Veröffentlichungstag der Anmeldung: **30.09.2015**
(21) Anmeldenummer: 15157152.8
(22) Anmeldetag: 02.03.2015
(51) Int. Cl.: B60H 1/00, B60H 1/32, F25B 1/00, F25B 17/00

(54) **Kraftfahrzeug**

(30) Priorität: 25.03.2014 DE 102014205532
(71) Anmelder: MAHLE Behr GmbH & Co. KG, 70469 Stuttgart (DE)
(72) Erfinder: Ludwig, Lars, 73776 Altbach (DE); Neumeister, Dirk, 70374 Stuttgart (DE); Burk, Roland, 70469 Stuttgart (DE)
(74) Vertreter: BRP Renaud & Partner mbB Rechtsanwälte Patentanwälte Steuerberater

(57) **Zusammenfassung**

Die Erfindung betrifft ein Kraftfahrzeug (1) mit einer Brennkraftmaschine (2) und einem Klimatisierungssystem (3), das einen Wärmetauscher (4) und eine Kompressionskältemaschine (5) aufweist, die beide in einen, eine Pumpe (6) aufweisenden Kühlmittelkreislauf (7) eingebunden sind und wobei die Kompressionskältemaschine (5) direkt oder indirekt von der Brennkraftmaschine (2) angetrieben ist. Erfindungswesentlich ist dabei, dass eine ebenfalls in den Kühlmittelkreislauf (7) eingebundene Adsorptionsanlage (8) vorgesehen ist, die zum Betrieb wärmeübertragend mit der Brennkraftmaschine (2) verbunden ist und deren Abwärme nutzt, und eine Ventileinrichtung (9) vorgesehen ist, welche in einer Stellung den Kühlmittelstrom ausschließlich über die Adsorptionsanlage (8) leitet und die Kompressionskältemaschine (5) sperrt.

Hierdurch kann eine kraftstoffreduzierte und emissionsarme Klimatisierung des Kraftfahrzeugs (1) erzielt werden.

## Beschreibung

Die vorliegende Erfindung betrifft ein Kraftfahrzeug mit einer Brennkraftmaschine und einem Klimatisierungssystem gemäß dem Oberbegriff des Anspruchs 1. Die Erfindung betrifft außerdem ein Verfahren zur Klimatisierung eines derartigen Kraftfahrzeugs.

Um eine Fahrzeugkabine eines Kraftfahrzeuges oder eine andere Komponente, beispielsweise einen elektrischen Energiespeicher, zu temperieren, wird einerseits Motorabwärme zum Heizen und andererseits ein Kältemittelkreislauf zur Kühlung verwendet. Der Kältemittelkreislauf besitzt dabei eine Kompressionskältemaschine mit einem Verdichter, der in der Regel entweder direkt mechanisch von einer Brennkraftmaschine (in der Regel ein Diesel- oder Ottomotor) oder indirekt, zum Beispiel über einen Elektromotor, angetrieben wird. Unabhängig von der Antriebsweise versorgt jedoch allein der mechanische Energieanteil der Brennkraftmaschine den Verdichter der Kompressionskältemaschine mit Antriebsenergie. Bedingt durch den Wirkungsgrad der Brennkraftmaschine werden rund Zweidrittel der im Kraftstoff enthaltenen Energie in Form von Wärme ungenutzt abgeführt. Dies bedeutet, dass der Energiebedarf für die Klimatisierung des Kraftfahrzeugs wirkungsgradbedingt erstens teuer und zweitens unter zusätzlichen Umweltbelastungen, beispielsweise über eine erhöhte CO₂-Emission, erkauft werden muss. Gerade die CO₂-Emission ist dabei ein derzeit allgegenwärtiges Diskussionsthema.

Aus der DE 10 2004 053 436 A1 ist eine Adsorptionswärmepumpe zur Klimatisierung eines Kraftfahrzeuges mit einer ersten Adsorberkammer bekannt, die über ein erstes Verbindungselement mit einem Kondensator und über ein zweites Verbindungselement mit einem Verdampfer verbunden ist. Die Adsorptionswärmepumpe besitzt darüber hinaus eine zweite Adsorberkammer, die über ein drittes Verbindungselement mit dem Kondensator und über ein viertes Verbindungselement mit dem Verdampfer verbunden ist, wobei der Verdampfer und der Kondensator zwischen der ersten Adsorberkammer und der zweiten Adsorberkammer angeordnet sind und durch eine Kondensatrückführung mit einem druckreduzierenden Verbindungselement verbunden sind. Die Adsorberkammern, der Kondensator und der Verdampfer sind dabei von einer nicht freitragenden Vakuumhülle umgeben. Hierdurch soll eine Adsorptionswärmepumpe bereitgestellt werden können, welche eine kompakte Bauart aufweist.

Aus der DE 10 2010 002 018 A1 ist ein Heizsystem für ein elektrisch antreibbares Kraftfahrzeug bekannt, umfassend eine elektrische Antriebskomponente, einen elektrischen Energiespeicher, einen Kühlkreislauf mit einem umlaufenden Kühlmittel zur Aufnahme von Abwärme der Antriebskomponente und einen ersten Wärmeübertrager zum Austausch von Wärme zwischen dem Kühlkreislauf und der Umgebungsluft. Ein thermoelektrisches Wärmepumpenglied ist dabei über einen zweiten Wärmeübertrager mit dem Kühlkreislauf gekoppelt, um Wärme zwischen dem Kühlkreislauf und einem Passagierbereich zu transportieren, wobei ein weiteres thermoelektrisches Wärmepumpenglied an den ersten Wärmeübertrager gekoppelt ist, um Wärme zwischen dem Kühlkreislauf und der Umgebungsluft zu transportieren. Hierdurch soll ein Heizsystem für ein elektrisch antreibbares Kraftfahrzeug geschaffen werden, das einen möglichst sparsamen Betrieb ermöglicht.

Die vorliegende Erfindung beschäftigt sich mit dem Problem, für ein Kraftfahrzeug der gattungsgemäßen Art eine verbesserte oder zumindest eine alternative Ausführungsform anzugeben, die insbesondere ein Klimatisieren des Kraftfahrzeuges mit deutlich reduzierter CO₂-Emission ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zur Klimatisierung eines Kraftfahrzeugs nicht wie bisher lediglich eine mechanisch angetriebene Kompressionskältemaschine zu verwenden, sondern zusätzlich oder alternativ auch eine von einer Abwärme einer Brennkraftmaschine angetriebene Adsorptionsanlage. Die Adsorptionsanlage nutzt dabei anhand von Adsorptionsprozessen die bereits vorhandene Motorabwärme, welche durch den Energiebedarf für den Vortrieb des Kraftfahrzeugs erzeugt wurde. Dies bietet den großen Vorteil, dass der Hauptanteil der notwendigen Klimatisierungsenergie nicht zusätzlich erzeugt werden muss, sondern aus bisher ungenutzter Motorabwärme gewonnen werden kann. Das erfindungsgemäße Kraftfahrzeug weist hierzu die zuvor erwähnte Brennkraftmaschine sowie ein Klimatisierungssystem auf, das einen Wärmetauscher und eine Kompressionskältemaschine umfasst. Beide sind dabei in einem, eine Pumpe aufweisenden Kühlmittelkreislauf eingebunden, wobei die Kompressionskältemaschine von der Brennkraftmaschine angetrieben ist. Die ebenfalls in den Kühlmittelkreislauf eingebundene Adsorptionsanlage nutzt zum Betrieb die Abwärme der Brennkraftmaschine und ist deshalb wärmeübertragend mit dieser verbunden. Zusätzlich ist nun eine Ventileinrichtung vorgesehen, welche in einer Stellung den Kühlmittelstrom ausschließlich über die Adsorptionsanlage leitet und die Kühlmittelströmung durch die Kompressionskältemaschine sperrt. In dieser Ventilstellung erfolgen somit die Kühlung des Kühlmittels und damit auch die Klimatisierung des Kraftfahrzeugs, beispielsweise einer Komponente desselben oder einer Fahrzeugkabine, ausschließlich über die Adsorptionsanlage, wobei die Energie zum Betrieb dieser Adsorptionsanlage aus der bisher nicht genutzten Motorabwärme der Brennkraftmaschine gewonnen wird. Durch die Nutzung der bisher nicht genutzten Motorabwärme über die Adsorptionsanlage kann somit die Kompressionskältemaschine entlastet oder im günstigsten Fall sogar komplett ausgeschaltet werden. Zum Betrieb der Adsorptionsanlage ist kein zusätzlicher Kraftstoff erforderlich, da deren Antriebsenergie ausschließlich aus der Motorabwärme der Brennkraftmaschine gedeckt wird. Es ist somit möglich, mit dem erfindungsgemäßen Konzept, den Kraftstoffbedarf massiv zu reduzieren, wodurch folglich auch Kraftstoffkosten und Abgasemissionen, insbesondere die in der Diskussion stehende CO₂-Emission, deutlich reduziert werden können.

Zweckmäßig ist der Wärmetauscher als Kühlmittel-Luft-Wärmeübertrager ausgebildet. In dem Kühlmittelkreislauf strömt ein Kühlmittel, beispielsweise ein GlykolWasser-Gemisch, welches seine kühlende Wirkung an die ebenfalls durch den Wärmetauscher geleitete Luft abgibt und dadurch die Fahrzeugkabine bzw. die zu kühlende Komponente kühlt. Die zu kühlende Baukomponente bzw. Komponente kann beispielsweise ein elektrischer Energiespeicher, insbesondere eine Fahrzeugbatterie, sein.

Im Unterschied zum Kühlmittelkreislauf, der einen Sekundärkreislauf darstellt, beinhaltet die Kompressionskältemaschine einen Kältemittelkreislauf, der im Vergleich dazu einen Primärkreislauf darstellt und einen Kondensator und einen Verdichter umfasst. Der Verdichter ist dabei in bekannter Weise mechanisch direkt oder indirekt von der Brennkraftmaschine angetrieben. Ein direkter mechanischer Antrieb kann beispielsweise durch eine mechanische Kopplung erfolgen, wogegen ein indirekter mechanischer Antrieb beispielsweise mittels eines Elektromotors bewerkstelligt wird, der seine elektrische Energie von der Lichtmaschine des Kraftfahrzeugs erhält, die wiederum von der Brennkraftmaschine angetrieben ist.

Bei einer weiteren vorteilhaften Ausführungsform der erfindungsgemäßen Lösung ermöglicht die Ventileinrichtung eine beliebige Aufteilung der Kühlmittelstroms zwischen der Adsorptionsanlage und der Kompressionskältemaschine. Die Ventileinrichtung ist somit in der Lage, beispielsweise 100 % des Kühlmittelstroms durch die Adsorptionsanlage oder die Kompressionskältemaschine zu leiten oder aber auch ein beliebiges Zwischenverhältnis. Bei einem kompletten Sperren des durch die Kompressionskältemaschine strömenden Kühlmittelstroms wird die gewünschte Kühlenergie ausschließlich über die Adsorptionsanlage und damit ausschließlich von der bisher nicht genutzten Motorabwärme der Brennkraftmaschine erzeugt, so dass in diesem Fall der bisher zur Kühlung erforderliche Kraftstoffbedarf und auch verbunden damit die CO₂-Emissionen deutlich reduziert werden können. Voraussetzung ist selbstverständlich, dass die Brennkraftmaschine die erforderliche Wärme zum Betrieb der Adsorptionsanlage bereitstellt.

Die vorliegende Erfindung beruht weiter auf dem allgemeinen Gedanken, ein Verfahren zur Klimatisierung eines Kraftfahrzeuges, die um eine Kühlung einer Fahrzeugkabine oder einer Komponente mittels eines Wärmetauschers erfolgt, der in einem Kühlmittelkreislauf eingebunden ist. Die Kühlung des Kühlmittels erfolgt dabei mittels einer von einer Brennkraftmaschine angetriebenen Kompressionskältemaschine und/oder mittels einer mit der Brennkraftmaschine wärmeübertragend verbundenen Adsorptionsanlage. Je nach Temperatur der Brennkraftmaschine und damit je nach abgestrahlter Wärmeenergie derselben ist es somit möglich, die bisher für die Kühlung eingesetzte Kompressionskältemaschine zu entlasten oder gänzlich abzuschalten und im günstigsten Fall die erforderliche Kühlenergie ausschließlich über die Adsorptionsanlage bereitstellen zu können. Eine Aufteilung des Kühlmittelstroms zwischen der Adsorptionsanlage und der Kompressionskältemaschine erfolgt dabei über eine erfindungsgemäße Ventileinrichtung, die in der Lage ist, den Kühlmittelstrom beliebig auf die Kompressionskältemaschine und/oder die Adsorptionsanlage aufzuteilen. Bei einem Kaltstart der Brennkraftmaschine wird somit die Kühlung beispielsweise von der Kompressionskältemaschine bereitgestellt, die mechanische von der Brennkraftmaschine direkt oder indirekt angetrieben ist. Weist die Brennkraftmaschine eine vorgegebene Temperatur auf, so kann zur Entlastung oder sogar zum Abschalten der Kompressionskältemaschine die Adsorptionsanlage eingeschaltet werden, wobei diese die von der Brennkraftmaschine bisher ungenutzt abgestrahlte Wärme als Energiequelle nutzt. Insgesamt ermöglicht somit das erfindungsgemäße Verfahren eine äußerst energiesparende und emissionsarme Klimatisierung des Kraftfahrzeugs.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: eine Ausschnittdarstellung eines erfindungsgemäßen Kraftfahrzeugs im Bereich eines Klimatisierungssystems,
- Fig. 2: das Klimatisierungssystem im Bereich eines Wärmetauschers.

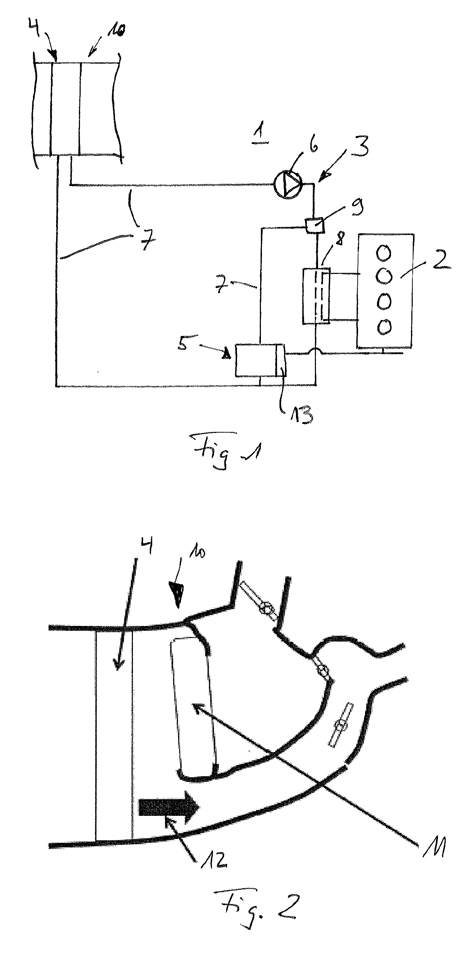

Entsprechend der Figur 1, weist ein erfindungsgemäßes Kraftfahrzeug 1 eine Brennkraftmaschine 2 sowie ein Klimatisierungssystem 3 auf. Das Klimatisierungssystem 3 besitzt einen Wärmetauscher 4 sowie ein Kompressionskältemaschine 5, die beide in einen, eine Pumpe 6 aufweisenden Kühlmittelkreislaufs 7 eingebunden sind. Die Kompressionskältemaschine 5 ist dabei direkt oder indirekt von der Brennkraftmaschine 2 angetrieben. Ein direkter Antrieb kann beispielsweise mittels eine entsprechenden mechanischen Verbindungsgliedes erfolgen, wogegen ein indirekter Antrieb beispielsweise über einen Elektromotor erfolgt, der von einer Lichtmaschine mit elektrischer Energie versorgt wird, wobei diese Lichtmaschine wiederum von der Brennkraftmaschine 2 angetrieben ist. Erfindungsgemäß ist nun eine ebenfalls in den Kühlmittelkreislauf 7 eingebundene Adsorptionsanlage 8 vorgesehen, die zum Betrieb wärmeübertragend mit der Brennkraftmaschine 2 verbunden ist und deren bislang ungenutzte Motorabwärme nutzt. Darüber hinaus ist eine Ventileinrichtung 9 vorgesehen, die in einer Stellung den Kühlmittelstrom ausschließlich über die Adsorptionsanlage 8 leitet und gleichzeitig die Kompressionskältemaschine 5 sperrt. In einer anderen Stellung selbstverständlich kann die Ventileinrichtung 9 den Kühlmittelstrom ausschließlich über die Kompressionskältemaschine 5 leiten und dadurch die Adsorptionsanlage 8 sperren, wogegen selbstverständlich auch beliebige Zwischenstellungen denkbar sind, in welchen ein Anteil des Kühlmittelstroms durch die Kompressionskältemaschine 5 strömt, wogegen ein anderer Anteil durch die Adsorptionsanlage 8 strömt.

Die Kompressionskältemaschine 5 besitzt üblicherweise einen Kältemittelkreislauf, in dessen Verlauf ein Verdichter 13 sowie ein Kondensator angeordnet sind. Der Verdichter 13, das heißt der Kompressor, wird dabei von der Brennkraftmaschine 2 direkt oder indirekt angetrieben.

Durch die erfindungsgemäße Ventileinrichtung 9 und die erfindungsgemäße ebenfalls in den Kühlmittelkreislauf 7 integrierte Adsorptionsanlage 8 ist es möglich, die bislang von der Brennkraftmaschine 2 ungenutzt abgegebene Motorwärme nunmehr zur Kühlung einer Baukomponente, insbesondere einer Fahrzeugkabine des Kraftfahrzeugs 1 zu nutzen. Weist demzufolge die Brennkraftmaschine 2 ihre Betriebstemperatur auf, so kann die zur Kühlung erforderliche Kühlenergie vorzugsweise ausschließlich von der Adsorptionsanlage 8 erzeugt werden, wodurch die bisher zusätzlich zum Betrieb der Kompressionskältemaschine 5 erforderliche und von der Brennkraftmaschine 2 bereitzustellende mechanische Energie nicht mehr aufgewendet werden muss. Durch die Nutzung der Motorabwärme über die Adsorptionsanlage 8 kann die Kompressionskältemaschine 5 somit entweder entlastet oder sogar komplett ausgestaltet werden, wobei für den Betrieb der Adsorptionsanlage 8 kein zusätzlicher Kraftstoff aufgewendet werden muss, sondern lediglich die ohnehin zur Verfügung stehende Motorwärme der Brennkraftmaschine 2 genutzt werden kann. Durch dieses völlig neuartige Konzept ist es erstmals möglich, sowohl die Kraftstoffkosten als auch die Abgasemissionen, insbesondere auch die CO₂-Emissionen, deutlich zu reduzieren.

In dem Kühlmittelkreis 7 ist ein Kühlmittel, beispielsweise ein Glykol-WasserGemisch vorgesehen, welches separat zum Kältemittel in der Kompressionskältemaschine 5 verläuft. Die Ventileinrichtung 9 ermöglicht eine beliebige Aufteilung des Kühlmittelstroms zwischen der Adsorptionsanlage 8 und der Kompressionskältemaschine 5, so dass beispielsweise während einer Kaltstartphase für die Kühlung des Kraftfahrzeugs 1 ausschließlich die Kompressionskältemaschine 5 eingesetzt werden kann, wogegen bei zunehmender Erwärmung der Brennkraftmaschine 2 deren Motorabwärme über die Adsorptionsanlage 8 zur Kühlung verwendet werden kann.

Gemäß der Figur 2 ist ein Wärmetauscher 4 eingebaut in ein Klimagerät 10 des Kraftfahrzeugs 1 dargestellt. Neben dem Wärmetauscher 4 zur Kühlung, beispielsweise einer Fahrzeugkabine, ist auch ein Heizungswärmeübertrager 11 vorgesehen, mittels welchem der in Richtung beispielsweise der Fahrzeugkabine strömende Luftstrom 12 erwärmt werden kann.

## Patentansprüche

1. Kraftfahrzeug (1) mit einer Brennkraftmaschine (2) und einem Klimatisierungssystem (3), das einen Wärmetauscher (4) und eine Kompressionskältemaschine (5) aufweist, die beide in einen, eine Pumpe (6) aufweisenden Kühlmittelkreislauf (7) eingebunden sind und wobei die Kompressionskältemaschine (5) direkt oder indirekt von der Brennkraftmaschine (2) angetrieben ist, **dadurch gekennzeichnet, dass**
- eine ebenfalls in den Kühlmittelkreislauf (7) eingebundene Adsorptionsanlage (8) vorgesehen ist, die zum Betrieb wärmeübertragend mit der Brennkraftmaschine (2) verbunden ist und deren Abwärme nutzt,
- eine Ventileinrichtung (9) vorgesehen ist, welche in einer Stellung den Kühlmittelstrom ausschließlich über die Adsorptionsanlage (8) leitet und die Kompressionskältemaschine (5) sperrt.

2. Kraftfahrzeug nach Anspruch 1,
**dadurch gekennzeichnet, dass**
der Wärmetauscher (4) als Kühlmittel-Luft-Wärmeübertrager ausgebildet ist.

3. Kraftfahrzeug nach Anspruch 1 oder 2,
**dadurch gekennzeichnet, dass**
das Klimatisierungssystem (3) zur Klimatisierung einer Baukomponente oder einer Fahrzeugkabine ausgebildet ist.

4. Kraftfahrzeug nach einem der vorhergehenden Ansprüche,
**dadurch gekennzeichnet, dass**
in dem Kühlmittelkreislauf (7) beispielsweise ein Glykol-Wassergemisch vorgesehen ist.

5. Kraftfahrzeug nach einem der vorhergehenden Ansprüche,
**dadurch gekennzeichnet, dass**
die Kompressionskältemaschine (5) einen Kältemittelkreislauf mit einem Verdichter (13) aufweist, der mechanisch direkt oder indirekt von der Brennkraftmaschine (2) angetrieben ist.

6. Kraftfahrzeug nach einem der vorhergehenden Ansprüche,
**dadurch gekennzeichnet, dass**
die Ventileinrichtung (9) eine beliebige Aufteilung des Kühlmittelstroms zwischen der Adsorptionsanlage (8) und der Kompressionskältemaschine (5) ermöglicht.

7. Verfahren zur Klimatisierung eines Kraftfahrzeugs (1) nach einem der vorhergehenden Ansprüche, bei dem eine Kühlung einer Fahrzeugkabine oder einer Komponente mittels eines Wärmetauschers (4) erfolgt, der in einen Kühlmittelkreislauf (7) eingebunden ist, wobei die Kühlung des Kühlmittels mittels einer von einer Brennkraftmaschine (2) angetriebenen Kompressionskältemaschine (5) und/oder mittels einer mit der Brennkraftmaschine (2) wärmeübertragend verbundenen Adsorptionsanlage (8) erfolgt.

8. Verfahren nach Anspruch 7,
**dadurch gekennzeichnet, dass**
ein Kühlmittelstrom über eine Ventileinrichtung (9) zwischen der Adsorptionsanlage (8) und der Kompressionskältemaschine (5) aufgeteilt wird.
